# EUROPEAN PATENT APPLICATION

(11) **EP 1 061 092 A1**
(43) Date of publication of application: **20.12.2000**
(21) Application number: 99201944.8
(22) Date of filing: 17.06.1999
(51) Int. Cl.: C08G 18/28, C08L 67/00, C08J 9/08

(54) **Process for the preparation of a rigid polyurethane foam.**

(71) Applicant: SHELL INTERNATIONALE RESEARCH MAATSCHAPPIJ B.V., 2596 HR Den Haag (NL)
(72) Inventor: Fricot, Angelina Maria Dolores, 1348 Ottignies, Louvain-la-Neuve (BE); Galina, Claudio, 1348 Ottignies, Louvain-la-Neuve (BE); Vanlandschoot, Koen Christophe Jeroen, 1348 Ottignies, Louvain-la-Neuve (BE)

(57) **Abstract**

Process for the preparation of a rigid, low density, open cell polyurethane foam, which process comprises reacting
(a) a polyisocyanate,
(b) a polyether polyol having a hydroxyl value of at least 150 mg KOH/g,
(c) a polyolefin mono-ol in an amount of from 0.01 to 3 pbw per 100 pbw of polyether polyol,
(d) a silicon oil in such amount that the weight ratio silicon oil: polyolefin mono-ol is in the range of from 0.2 to 15,
(e) 2 to 10 pbw of water per 100 pbw of polyether polyol,
(f) a urethane catalyst, and optionally
(h) usual auxiliaries,
wherein the amount of polyisocyanate used is such that the isocyanate index is in the range of from 75 to 120, preferably from 80 to 110.

## Description

The present invention relates to a process for the preparation of a rigid polyurethane foam and to a polyol blend which can suitably be used in this process.

In general, rigid polyurethane foams are well known for their excellent heat insulating properties.
Particularly closed cell polyurethane foams, are widely used as heat insulating material in e.g. pipes, storage tanks, buildings and refrigerators. Closed cell polyurethane foams used to be made with blowing agents based on chlorofluorocarbons (CFC's) of which R-11 (trichlorofluoromethane) was a frequently applied example. The heat insulating properties were for a large part determined by the thermal conductivity of CFC gases, which filled the cells of the foam. However, due to the ozone depleting effect of CFC's their use has become subject to strict environmental regulations and hence is limited nowadays. Alternative blowing agents have been investigated and are actually used, but is very difficult to find substitutes for CFC as a blowing agent, which have equally low thermal conductivity properties.
Although open cell rigid polyurethane foams have not such excellent heat insulating properties as closed cell rigid foams, their thermal conductivity is still sufficient to be useful as a heat insulating material.
Furthermore, the dimensional stability at low foam density of open cell foams is better than that of closed-cell foams. Open cell rigid polyurethane foams, accordingly, are very suitable for application as the core material in vacuum insulation panels. Such panels usually comprise a core material enclosed in a vacuum container of metal and/or plastic films. Furthermore, open cell rigid polyurethane foams can be used in those rigid foam applications, which do not require any heat insulating properties, but which do require some structural support, for instance, use for automotive headliners or packaging.

Several methods have been proposed to prepare open cell rigid polyurethane foams. For instance, in EP-A-0,547,515 a method for preparing open cell rigid polyurethane foams is disclosed, wherein a polymethylene polyphenylisocyanate prepolymer with a polyol at an NCO/OH equivalent ratio of 1.3 to 3.0 using water as the sole blowing agent in the presence of a catalyst, a foam stabiliser and a cell opening agent. The cell opening agent suitably is a divalent metal salt of a fatty acid, such as calcium stearate, magnesium stearate, strontium stearate or calcium myristate.

Another method is described in EP-A-0,581,191, where an open cell rigid polyurethane foam is prepared by reacting a polyol with a prepolymer obtained by reacting polymethylene polyphenyl polyisocyanate with a monohydric alcohol using a CFC-substitute as blowing agent in the presence of a catalyst, a foam stabiliser and a cell opening agent. The cell opening agent suitably is a divalent metal salt of a fatty acid, such as calcium stearate.

Although these methods are effective in producing open cell rigid polyurethane foams, there is still room for improvement. It would be beneficial if open cell rigid polyurethane foams could be provided having a very low density in combination with good mechanical or structural stability, as such low density foams are attractive for use in a wide variety of applications including the application as heat insulating material.

Accordingly, the present invention relates to a process for the preparation of a rigid, low density, open cell polyurethane foam, which process comprises reacting
(a) a polyisocyanate,
(b) a polyether polyol having a hydroxyl value of at least 150 mg KOH/g,
(c) a polyolefin mono-ol in an amount of from 0.01 to 3 pbw per 100 pbw of polyether polyol,
(d) a silicon oil in such amount that the weight ratio silicon oil: polyolefin mono-ol is in the range of from 0.2 to 15,
(e) 2 to 10 pbw of water per 100 pbw of polyether polyol,
(f) a urethane catalyst, and optionally
(h) usual auxiliaries,
wherein the amount of polyisocyanate used is such that the isocyanate index is in the range of from 75 to 120, preferably from 80 to 110.

Polyisocyanates that may be used as component (a) are those conventionally applied in the production of rigid polyurethane foams. Useful polyisocyanates should contain at least two isocyanate groups and include both aliphatic -usually alkylene- and aromatic di-, tri-, tetra- and higher isocyanates known in the art to be suitably applied in the production of rigid polyurethane foams. Mixtures of two or more of such aliphatic and/or aromatic polyisocyanates may also be applied. Examples of suitable polyisocyanates, then, include 2,4-toluene diisocyanate (2,4-TDI), 2,6-TDI, mixtures of 2,4-TDI and 2,6-TDI, 1,5-naphthene diisocyanate, 2,4-methoxyphenyl diisocyanate, 4,4'-diphenylmethane diisocyanate (MDI), 4,4'-biphenylene diisocyanate, 3,3'-dimethoxy-4,4'-biphenylene diisocyanate, 3,3'-dimethyl-4,4'-biphenylene diisocyanate and 3,3'-dimethyl-4,4'-diphenylmethane diisocyanate, 4,4',4"-triphenylmethane triisocyanate, 2,4,6-toluene triisocyanate, 4,4'-dimethyl-2,2',5,5'-diphenylmethane tetraisocyanate, polymethylenepolyphenylene polyisocyanate and mixtures of two or more of these. Polymeric MDI, a mixture of polyisocyanates with MDI as the main component, may also be used. For the purpose of the present invention it has been found particularly advantageous to use polymeric MDI.

The quantity of polyisocyanate component to be used should be such that the isocyanate index has a value between 75 and 120, most suitably between 80 and 110.

The polyether polyol component (b) can be any rigid polyol or combination of rigid polyols having an average hydroxyl value of at least 150 mg KOH/g, and preferably not higher than 750 mg KOH/g. The term "polyether polyol" as used in this connection refers to polyols comprising poly(alkylene oxide) chains, which polyols are normally obtained by reacting a polyhydroxy or polyamine initiator compound with at least one alkylene oxide and optionally other compounds. Rigid polyols are known in the art. Commonly applied rigid polyols, which can be suitably applied in the polyol blend of the present invention, are polyoxyalkylene polyols have a nominal molecular weight of from 300 to 1500, suitably 500 to 1000, and a nominal average functionality of at least 2.0, suitably from 2.5 to 6. For the purpose of the present invention the average hydroxyl number preferably has a value in the range of from 200 to 650 mg KOH/g. The polyol component (b) may comprise a single rigid polyol, but may also comprise two or more rigid polyols. In a preferred embodiment the polyol component (b) comprises a polyol having a hydroxyl value of 150 to 400 mg KOH/g and a polyol having a hydroxyl value of 400 to 650 mg KOH/g.

The polyolefin mono-ol used as component (c) is believed to act as the cell-opener. Polyolefin mono-ols are known in the art. Suitable polyolefin mono-ols for the purpose of the present invention are those described in International patent application No. WO-98/36025. Thus, suitable polyolefin mono-ols are polyolefins containing a hydroxyl group substantially at one end of the polyolefin chain. The polymer backbone of the polyolefin mono-ol typically is the polymerised product of an olefin monomer or an olefin monomer and a vinyl aromatic monomer. The olefin monomer suitably contains from 2 to 10 carbon atoms, more preferably from 4 to 6 carbon atoms. The preferred olefin monomers are butadiene, isoprene or mixtures thereof, most preferably butadiene. The vinyl aromatic monomer is preferably a vinyl monoaromatic monomer, such as styrene or C1-C4 alkyl substituted styrene. If present, the polyolefin mono-ol may contain up to 50% by weight (wt%) of polymerised vinyl aromatic monomer, preferably from 0 to 20 wt%, more preferably from 0 to 5 wt%.

According to a much preferred embodiment the polyolefin mono-ol is a polydiene mono-ol, preferably having a hydrogenated polydiene backbone, typically a hydrogenated polydiene backbone wherein the olefinic unsaturation is less than 20%, more preferably less than 5%. The olefinic unsaturation as used herein excludes any unsaturation present in any aromatic groups present in the polymer. Methods to determine olefinic unsaturation are known to those skilled in the art.

Most preferably, hydrogenated polybutadiene mono-ol is used. Such hydrogenated polybutadiene mono-ol suitably has a 1,2-addition between 30 and 70% to minimise viscosity and subsequent crystallisation.

The functionality of the polyolefin mono-ol typically ranges from 0.6 to 1.4 hydroxyl groups per molecule. Preferably the functionality ranges from 0.8 to 1.2, most preferably from 0.9 to 1.0. The functionality can be determined by NMR or chemical titration techniques.

The polyolefin mono-ol suitably has a number average molecular weight in the range from 500 to 15,000 g/mole, preferably from 1000 to 12,500 g/mole and more preferably from 1500 to 6000 g/mole. The number average molecular weights referred to in this specification are number average molecular weights measured by gel permeation chromatography (GPC) calibrated with polybutadiene standards having known number average molecular weights. The solvent for the GPC analyses is tetrahydrofuran.

The polyolefin mono-ol is used in an amount of from 0.01 to 3 pbw, preferably 0.02 to 1.5 pbw, more preferably 0.05 to 1.0 pbw and most preferably from 0.05 to 0.4 pbw, per 100 pbw of polyether polyol component (b).

The polyolefin mono-ol may be used as such, but may also be combined with a lower viscosity material to facilitate its dosing. Suitably a liquid is used with which the polyolefin is well miscible. It has been found particularly advantageous to use polyester polyols for this purpose. The term "polyester polyol" as used in this connection refers to polyols comprising ester bondings in the polymer chain. One way of preparing such polyols is, for instance, reacting a polycarboxylic acid or carboxylic acid anhydride with a polyhydroxy compound. Suitable polyester polyols include, for instance, difunctional aromatic polyester polyols. One category of such polyester polyols typically used are the polyester polyols produced from phthalic anhydride and diethylene glycol. Another category uses either the heavy residue of the production of dimethyl terephthalate or scraps of recycled polyethylene terephthalate (PET) as the feedstock.

If a polyester polyol is used, it is typically used in the form of a polyol blend comprising
(a) 100 pbw of a polyester polyol, and
(b) 1 to 10 pbw of a polyolefin mono-ol.

The silicon oil component (d) may in principle be any silicon oil known to be applicable as surfactant in polyurethane formulations. Such silicon oils are well known in the art and are generally composed of polysiloxane-polyether (block) copolymers. To each polysiloxane segment, which can be linear or branched, two or more polyether segments are attached either at the end or internally. Preferred silicon oils contain one polysiloxane segment. For the purpose of the present invention it has been found particularly advantageous to use hydrophilic silicon oils of which the polyether segments have a high ethylene oxide content (at least 50 wt%, preferably from 70 to 95 wt%, more preferably between 70 and 90 wt%) and terminal hydroxyl groups. These silicon oils also suitably have cloud points of at least 60 °C, preferably between 60 and 90 °C. Such hydrophilic silicon oils are generally soluble in rigid polyols. More hydrophobic silicon oils, i.e. silicon oils of which the polyether chains are capped by alkoxy (e.g. methoxy) groups in stead of hydroxyl groups and generally having cloud points below 60 °C, may also be used, but are less preferred. An example of a suitable commercially available silicon oil is Tegostab B8404 ex Goldschmidt (OH-capped, ethylene oxide content of 75 wt% and cloud point of 64 °C).

The silicon oil is used in such amount that the weight ratio of silicon oil to polyolefin mono-ol is in the range of from 0.2 to 15, preferably 2 to 14 and more preferably 4 to 13.

Water -component (e)- is used as the blowing agent. It is used in an amount of from 2 to 10 pbw, preferably from 3 to 8 pbw, per 100 pbw of polyether polyol component (b). In addition to water physical blowing agents like pentane and cyclopentane may be used, but given the open cell structure of the envisaged polyurethane foam this would be of little practical value and hence it is preferred to use water as the sole blowing agent.

It was also found that it is preferred to use water in lower amounts at low silicon oil:polyolefin mono-ol ratios and to use higher amounts of water when this ratio is higher. More specifically, if the silicon oil:polyolefin mono-ol ratio is less than 2 it is preferred to use water in an amount of less than 4 pbw per 100 pbw of polyether polyol. If, on the other hand, the silicon oil:polyolefin mono-ol ratio is 2 or more, it is preferred to use water in an amount of 4 pbw or more per 100 pbw of polyether polyol. In general, it is preferred to apply a silicon oil:polyolefin mono-ol ratio of 2 or more for processability reasons.

The polyurethane catalyst, component (f), can be any polyurethane catalyst known to be suitable in urethane production. Suitable catalysts are those described in e.g. EP-A-0,358,282 and US-A-5,011,908 and include tertiary amines, salts of carboxylic acids and organometallic catalysts. Examples of suitable tertiary amines are triethylene diamine, N,N-dimethyl cyclohexyl amine, N-methyl morpholine, diethyl ethanol amine, diethanol amine, dimethyl benzyl amine and dimethyl cyclohexyl amine. Suitable organometallic catalysts include stannous octoate, stannous oleate, stannous acetate, stannous laureate, lead octoate, nickel naphthenate and dibutyltin dichloride. Further examples of organometallic catalysts are described in US-A-2,846,408. Of course, mixtures of two or more of the aforementioned catalysts may also be used.

The amount of urethane catalyst will usually be in the range of from 0.5 to 8.0 pbw, more suitably 1.0 to 5.0 pbw, per 100 pbw of polyether polyol component (b). A component (h) the usual auxiliaries may optionally be used. These are well known and include flame retardants, colouring agents and fillers.

The process according to the present invention can be carried out in ways known the art and it is within the routine skills of the skilled person to select the appropriate equipment and dosing order. A preferred way of carrying out the present process, however, is to first combine the polyether polyol, the silicon oil, the urethane catalyst and the usual auxiliaries (i.e. components (b), (d), (e) and (f)) into a single stream. Into this stream is subsequently injected the polyolefin mono-ol, suitably in a mixture with polyester polyol. The resulting combined stream is then mixed with the polyisocyanate stream, e.g. in a mixing head, after which the foaming reaction takes place.

The open cell, low density rigid foam produced by the process according to the present invention typically has an open cell content of at least 70%, suitably at least 85% and most suitably at least 90%, and a density of less than 50 kg/m³, suitably of from 10 to 35 kg/m³ and most suitably from 10 to 25 kg/m³.

In a further aspect the present invention relates to a polyol blend comprising
(a) 100 pbw of a polyester polyol, and
(b) 1 to 10 pbw of a polyolefin mono-ol.

It was found that this blend is very useful for dosing the polyolefin mono-ol in the process described herein before. The preferred embodiments in respect of both polyester polyol and polyolefin mono-ol are the same as those described herein before. Accordingly, the preferred polyolefin mono-ol is a hydrogenated polybutadiene mono-ol.

The invention is further illustrated by means of the examples given below.

The components used in the examples are:
Polyol components
   Polyol A: A rigid, aromatic, amine-group containing, propylene oxide(PO)-based polyether polyol having a hydroxyl value of 530 mg KOH/g.
   Polyol B: A rigid, glycerol initiated polyether polyol having a hydroxyl value of 250 mg KOH/g.
Polyolefin mono-ol
   L-1203 : hydrogenated polybutadiene mono-ol having a functionality of 0.95 and a hydroxyl equivalent weight of 4200, marketed under the trademark KRATON Liquid Polymer L-1203 ex Shell Chemical.
Ancillary chemicals
   STEPANPOL PS2352: a polyester polyol based on phthalic anhydride and diethylene glycol having an OH value of 235 mg KOH/g and a functionality of 2.0 (STEPANPOL is a trademark).
   DABCO 33LV: urethane catalyst (33 wt% triethylene-diamine in dipropylene glycol) ex Air Products (DABCO is a trade mark).
   DIME 6 : urethane catalyst (N,N-dimethylcyclohexylamine; DIME is a trademark).
   B8404 : Tegostab B8404 (silicone surfactant) ex Goldschmidt (Tegostab is a trademark)
Isocyanate
   MDI : polymeric diphenylmethane diisocyanate

### Examples 1-3

Rigid polyurethane foams were prepared as follows. All components except the MDI were charged to a container and mixed with a stirrer at a speed of 3000 rpm (rotations per minute). The L-1203 was dosed as a 5 wt% blend in STEPANPOL PS 2353. When a homogeneous mixture was obtained, stirring was stopped and the MDI was added to the blend in five seconds. Immediately hereafter stirring was continued for another five seconds before the blend was poured into an open polyethylene bag, where the foam was formed. Closed cell content and free rise density of the foams formed were determined.

The closed cell content was determined with the standard test method BS4370/2:1973, method 10. Free rise density was determined by the standard test method ISO845.

The formulations used as well as the properties of the resulting rigid polyurethane foams are indicated in Table I.

**TABLE I**

| Foaming formulations | | | |
|---|---|---|---|
| | Ex-1 | Ex-2 | Ex-3 |
| Polyol A (pbw) | 32 | 32 | 32 |
| Polyol B (pbw) | 68 | 68 | 68 |
| water (pbw) | 3 | 4 | 6 |
| DABCO 33LV (pbw) | 0.95 | 0.70 | 0.70 |
| DIME 6 (pbw) | 0.65 | 0.50 | 0.50 |
| L-1203 (pbw) | 3 | 0.2 | 0.1 |
| STEPANPOL PS 2353 (pbw) | 57 | 3.8 | 1.9 |
| B8404 (pbw) | 1 | 1 | 1.2 |
| MDI (pbw) | 112.8 | 126.2 | 152.9 |
| B8404 : L-1203 | 0.33 | 5 | 12 |
| Isocyanate index | 90 | 90 | 90 |
| Density (kg/m3) | 36 | 32 | 22 |
| Closed cell content (%) | 12 | 14 | 7 |

## Claims

1. Process for the preparation of a rigid, low density, open cell polyurethane foam, which process comprises reacting
(a) a polyisocyanate,
(b) a polyether polyol having a hydroxyl value of at least 150 mg KOH/g,
(c) a polyolefin mono-ol in an amount of from 0.01 to 3 pbw per 100 pbw of polyether polyol,
(d) a silicon oil in such amount that the weight ratio silicon oil: polyolefin mono-ol is in the range of from 0.2 to 15,
(e) 2 to 10 pbw of water per 100 pbw of polyether polyol,
(f) a urethane catalyst, and optionally
(h) usual auxiliaries,
wherein the amount of polyisocyanate used is such that the isocyanate index is in the range of from 75 to 120, preferably from 80 to 110.

2. Process as claimed in claim 1, wherein the silicon oil has terminal OH groups and contains polyether segments with an ethylene oxide content of at least 50 wt%.

3. Process as claimed in claim 1 or 2, wherein the polyolefin mono-ol is added in the form of a polyol blend comprising
(a) 100 pbw of a polyester polyol, and
(b) 1 to 10 pbw of a polyolefin mono-ol.

4. Process as claimed in any one of claims 1-3, wherein the polyolefin mono-ol is a hydrogenated polybutadiene mono-ol.

5. Process as claimed in any one of claims 1-4, wherein the ratio silicon oil:polyolefin mono-ol is in the range of from 2 to 14.

6. Process as claimed in claim 5, wherein the amount of water used is 4 pbw or more per 100 pbw of polyether polyol.

7. Polyol blend comprising
(a) 100 pbw of a polyester polyol, and
(b) 1 to 10 pbw of a polyolefin mono-ol.

8. Polyol blend as claimed in claim 5, wherein the polyolefin mono-ol is a hydrogenated polybutadiene mono-ol.
